# EUROPEAN PATENT SPECIFICATION

(11) **EP 1 077 152 B1**
(45) Date of publication and mention of the grant of the patent: **22.03.2006**
(21) Application number: 00306550.5
(22) Date of filing: 01.08.2000
(51) Int. Cl.: B60N 2/28

(54) **Child safety seat**
Kindersicherheitssitz
Siège de sécurité pour enfants

(30) Priority: 17.08.1999 GB 9919322
(43) Date of publication of application: 21.02.2001
(73) Proprietor: BRITAX RÖMER Kindersicherheit GmbH, D-89024 Ulm (DE)
(72) Inventor: Stysch, Christian, 89073 Ulm (DE); Schall, Hermann, 89189 Neenstetten (DE)
(74) Representative: Ablett, Graham Keith

(56) References cited:
- EP-A- 0 822 115
- DE-A- 19 722 096

## Description

This invention relates to a child safety seat for use in a vehicle, of the type comprising a base member adapted to rest on a vehicle seat, a seat assembly pivotally mounted on the base member, guide means on the child seat defining a strap path for a strap of a vehicle seat belt to secure the seat to a vehicle seat and strap deflecting means positioned so that angular movement of the seat assembly relative to the base member causes movement of the strap deflecting means between a first position clear of said strap path and a second position in which a strap following said strap path is deflected therefrom, thereby tightening said strap.

A seat of this type is disclosed in EP-A-0822115. Angular movement of seat assembly requires a relatively high force due to the friction between the strap and the strap deflecting means. It is an object of the present invention to provide a child safety seat in which the force required to tighten the strap of a vehicle seat belt relative to the seat is reduced.

According to the invention, in a child safety seat of the type described above, the strap deflecting means comprises a lever pivotally mounted on the base member for angular movement about a transverse pivot axis, and the seat assembly is coupled to the lever so that angular movement of the seat assembly towards a position of normal use causes angular movement of the lever to deflect the strap from said strap path.

Preferably the seat assembly is coupled to the lever at a distance from the pivot axis greater than the distance of the strap path from the pivot axis.

The seat assembly may include an intermediate member which is mounted on the base and coupled to the lever, together with a seat body which is mounted on the intermediate member for movement between an upright position and a reclined position, as described in EP-A-0822115.

An embodiment of the invention will now be described, by way of example, with reference to the accompanying drawings in which:
Figure 1 is a side view of a first child safety seat in accordance with the invention with the strap deflecting means in its first position;
Figure 2 is a perspective view of the seat shown in Figure 1;
Figure 3 is a partially broken-away side view of the seat shown in Figure 1, but with the strap deflecting means in its second position;
Figure 4 is a partially broken-away perspective view of the seat as shown in Figure 3;
Figure 5 is a side view, similar to Figure 3, but showing the seat body in a reclined position; and
Figure 6 is a schematic side view of another seat in accordance with the invention.

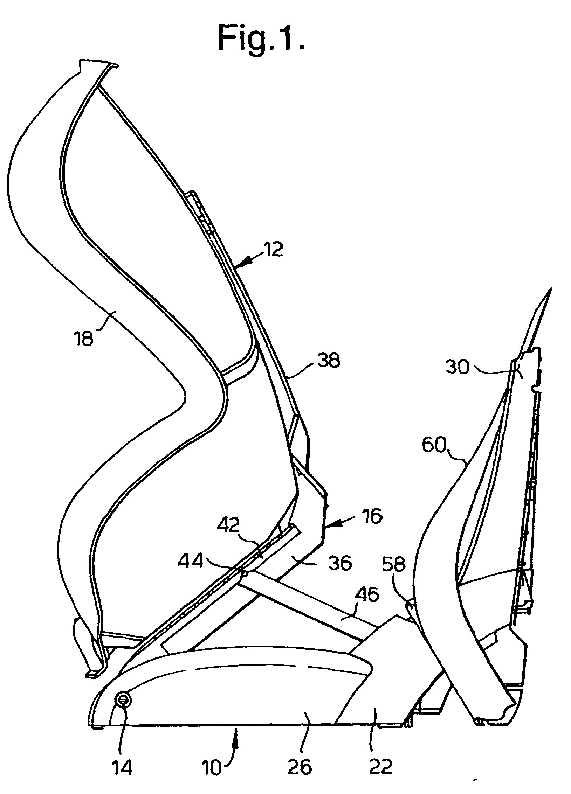

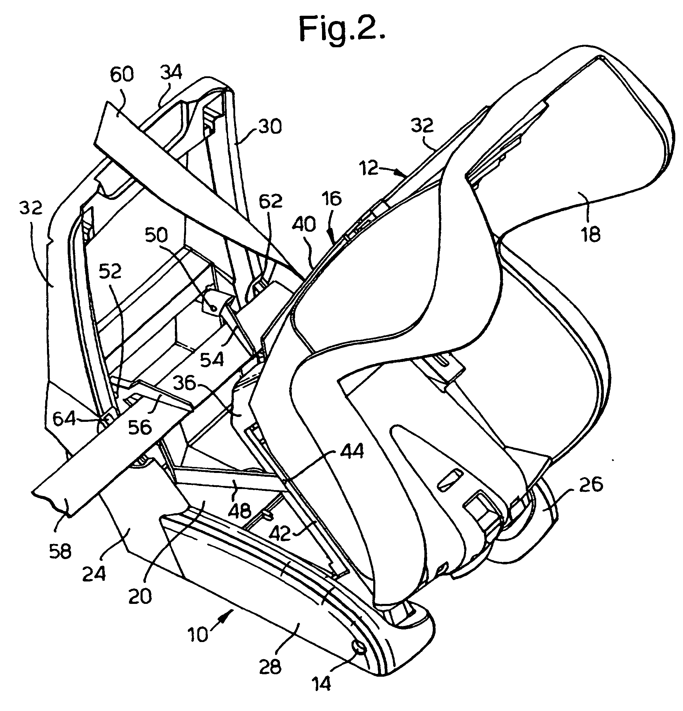

Referring to Figures 1 and 2, a child safety seat comprises a base member 10 and a seat assembly 12 which is coupled to the base member 10 by a pivot axle 14. The seat assembly 12 comprises an intermediate member 16, through which the axle 14 extends, and a seat body 18.

The base member 10 consists of a central horizontal portion 20 extending below the intermediate member 16 and two L-shaped side portions 22 and 24, extending upwardly from opposite sides of the central portion 20, with the intermediate member 16 located therebetween. The pivot axle 14 is journalled in forwardly extending limbs 26 and 28 of the side portions 22 and 24 which also has upwardly extending limbs 30 and 32.

The intermediate member 16 is similar to the base member in that it has a base portion 36 extending under the seat body 18 and L-shaped side portions 38 and 40 extending upwardly between the sides of the seat body 18 and the L-shaped side portions 22 and 24 of the base member 10. The seat body 18 is mounted on the intermediate member 16 in the manner described in EP-A-0822115, which allows the orientation of the seat body 18 to be changed relative to that of the intermediate member 16.

The base portion 36 of the intermediate member contains an open-ended slot 42 extending longitudinally under the seat body 18. A transverse rod 44 is slidable along the slot 42 and has its ends connected to respective levers 46 and 48. The levers 46 and 48 are pivotally mounted on respective axially aligned stub axles 50 and 52 which extend inwardly from near the bottom of the upwardly extending limbs 30 and 32 of the base member 10. Each of the levers 46 and 48 has a respective side limb 54, 56, extending from the vicinity of the pivot pins 50, 52 at an angle to the main part of the corresponding lever 46, 48 so as to form a V-shaped open-ended slot for receiving the lap portion 58 of a vehicle seat belt which also has a shoulder portion strap 60.

In use, the child seat is positioned on a vehicle seat so that the central portion 20 of the base member 10 rests on the seat cushion and the upwardly extending limbs 30 and 32 abut against the backrest. The seat body 18 and the intermediate member 16 are pivoted about the pivot axle 14 to the position shown in Figure 1. The V-shaped slots between the side limbs 54 and 56 and the main parts of the levers 46 and 48 are now level with the guide surfaces 62 and 64 on the base member 10.

Next, the lap portion 58 of the seat belt for the vehicle seat is threaded over guide surfaces 62 and 64 on the base member 10 and below the side limbs 54 and 56 of the levers 46 and 48. The buckle (not shown) of the vehicle seat belt is then fastened and any slack in the lap portion 58 pulled through to the shoulder portion 60. A locking device (not shown), which may be as described in EP-A-0200411, prevents any of the belt from being pulled back to the lap portion 58.

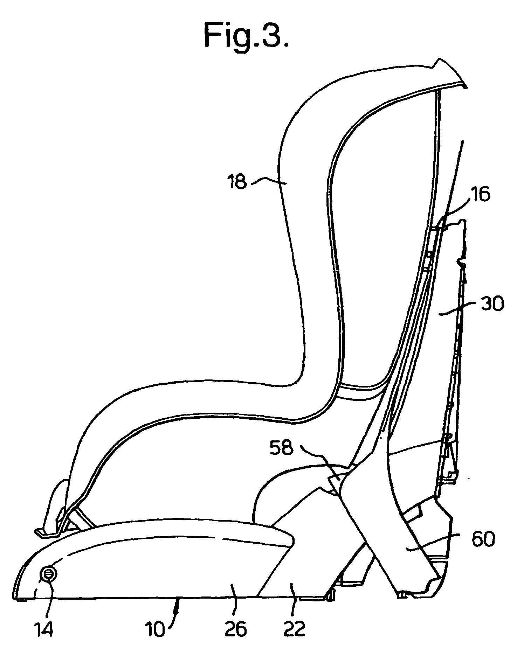

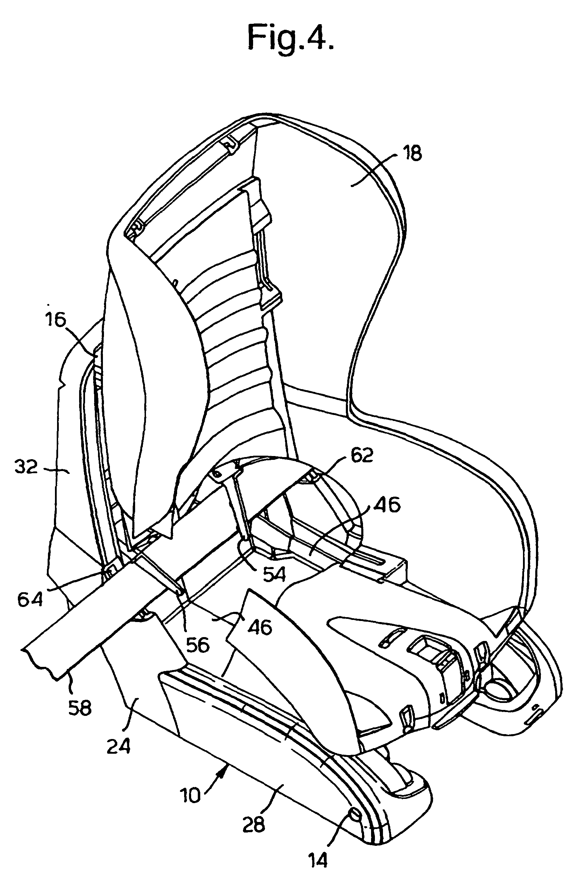

The next step is to pivot the seat body 18 and the intermediate member 16 rearwardly to the position shown in Figures 3 and 4. The rod 44 slides forwardly along the slot 42, pivoting the levers 46 and 48 clockwise (as viewed in Figure 2) so that their side limbs 54 and 56 press the lap portion 58 downwardly from the direct path between the two guide surfaces 62 and 64 on the base member 10, thereby tightening the vehicle seat belt 58, 60.

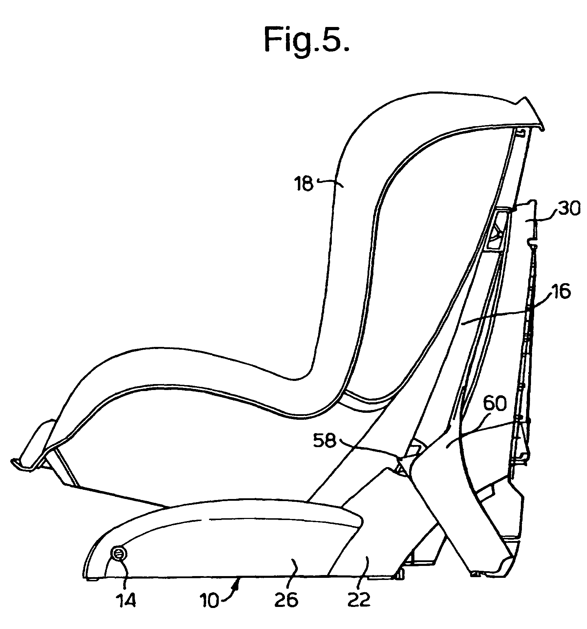

Figure 5 shows the seat body 18 in its reclined position on the intermediate member 16.

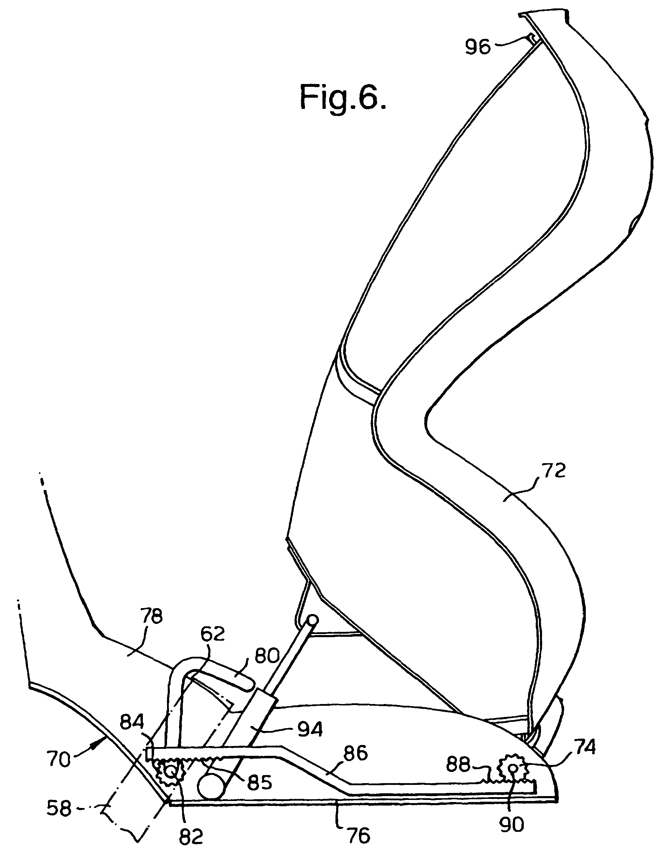

Figure 6 shows another child seat which is similar to the seat shown in Figures 1 to 5 in that it has a base member 70 and a seat assembly 72 which is coupled to the base member 10 by a pivot axle 74.

The base member 70 is similar to the base member 10 of Figures 1 to 5 in that it consists of a central horizontal portion 76 extending below the seat assembly 72 and two L-shaped side portions 78, extending upwardly from opposite sides of the central portion 20 and between which the pivot axle 74 is journalled. Each side portion 76 also has an upwardly extending limb 78 similar to the limbs 30 and 32 of Figures 1 to 5.

A pair of levers 80 are mounted on a transverse shaft 82 which is journaled in the rear ends of the side portions 78. The shaft 82 carries a gear wheel 84 which engages with a toothed rack 85 on the bottom edge of a slider 86. The slider 86 has a second toothed rack 88 on its upper edge which is engaged by a second gear wheel 90 on the shaft 74. With this arrangement, counter-clockwise movement of the seat assembly 72 about the shaft 74 cause clockwise movement of the levers 80 about the shaft 82. A spring-loaded strut 94 holds the seat assembly 72 in its raised position as illustrated.

The base member 70 is held in place by the lap portion 58 of a vehicle seat belt (shown in chain-dotted lines) which extends over guide surfaces 62 on the upper edges of the L-shaped side portions 78. When seat assembly 72 is pressed downwards against the action of the strut 94, the levers 80 move clockwise from the position illustrated, displacing the lap portion 58 down between the side portions 78 and thereby tightening the vehicle seat belt. The seat assembly 72 is held in its downwardly displaced position by engagement of a catch (not shown) on the upper ends of the L-shaped side portions 78 with a hook formation 96 on the back of the seat assembly 72.

The seat assembly 78 may include an intermediate member and a seat body which is mounted on the intermediate member for movement between an upright position and a reclined position, as described with reference to Figures 1 to 5.

## Claims

1. A child safety seat for use in a vehicle, comprising a base member (10, 70) adapted to rest on a vehicle seat, a seat assembly (12, 72) pivotally mounted on the base member (10, 70) for angular movement about a seat pivot axle (14, 74), guide means (62, 64) on the child seat defining a strap path for a strap (58) of a vehicle seat belt to secure the seat to a vehicle seat and strap deflecting means (54, 56, 80) positioned so that angular movement of the seat assembly (12, 72) relative to the base member (10, 70) causes movement of the strap deflecting means (54, 56, 80) between a first position clear of said strap path and a second position in which a strap (58) following said strap path is deflected therefrom, thereby tightening said strap (58), **characterised in that** the strap deflecting means comprises a strap-deflecting lever (54, 56, 80) pivotally mounted on the base member (10, 70) for angular movement about a lever pivot axle (50, 52, 82), and a drive assembly (44, 86) coupling the strap-deflecting lever (54, 56, 80) to the seat assembly (12, 72) so that angular movement of the seat assembly (12, 72) towards a position of normal use causes angular movement of the strap-deflecting lever (54, 56, 80) to deflect the strap (58) from said strap path.

2. A child safety seat according to claim 1, wherein the drive assembly comprises a second lever (46, 48) fast with the strap-deflecting lever (54, 56) and a cam (42) on the seat assembly (12) engaging with a cam follower (44) on the second lever (46, 48).

3. A child safety seat according to claim 2, wherein the cam follower (44) is located on coupled to the second lever (46, 48) at a distance from the lever pivot axle (50, 52, 82) greater than the distance of the strap path from the lever pivot axle (50, 52, 82).

4. A child safety seat according to claim 3, wherein the cam comprises a slot (42) in a base portion (36) of the seat assembly (12).

5. A child safety seat according to claim 1, wherein the drive assembly comprises a coupler (86) connecting the seat pivot axle (74) to the lever pivot axle (82) so that angular movement of the seat pivot axle (74) in a first direction causes angular movement of the lever pivot axle (82) in a second direction opposite to said first direction.

6. A child safety seat according to claim 6 wherein the drive assembly comprises a toothed rack (86) engaging with a first pinion (84) on the on the lever pivot axle (82) and with a second pinion (90) on the seat pivot axle (74).

7. A child safety seat according to any preceding claim, wherein the seat assembly includes an intermediate member (16) which is mounted on the base member (10, 70) and coupled by the drive assembly (44, 86) to the strap-deflecting lever (54, 56, 80), together with a seat body (72) which is mounted on the intermediate member (16) for movement between an upright position and a reclined position.

## Patentansprüche

1. Kindersicherheitssitz zur Verwendung in einem Fahrzeug, mit einem Grundelement (10, 70), das so ausgebildet ist, dass es auf einem Fahrzeugsitz ruht, einer Sitzbaugrupipe (12, 72), die schwenkbar am Grundelement (10, 70) für eine winkelbewegung um eine Sitzschwenkachse (14, 74) angebracht ist, einer Führungseinrichtung (62, 64) am Kindersitz, um einen Bandweg für ein Band (58) eines Fahrzeug-Sitzgurts zum Befestigen des Sitzes an einem Fahrzeugsitz zu bilden, und einer Bandablenkeinrichtung (54, 56, 80), die so positioniert ist, dass eine winkelbewegung der Sitzbaugruppe (12, 72) relativ zum Grundelement (10, 70) zu einer Bewegung der Bandablenkeinrichtung (154, 56, 80) zwischen einer ersten Position, frei vom Bandweg, und einer zweiten Position führt, in der eine dem Bandweg folgendes Band (58) gegenüber; diesen abgelenkt ist, um **dadurch** das Band (58) anzuziehen, führt, **dadurch gekennzeichnet, dass** die Bandablenkeinrichtung einen Bandablenkhebel (54, 56, 80), der am Grundelement (10, 70) für eine Winkelbewegung um eine Bebelschwenkachse (50, 52, 82) schwenkbar angebracht ist, und eine Antriebsbaugruppe (44, 86) aufweist, die den Bandablenkhebel . (54, 56, 80) so mit der Sitzbaugruppe (12, 72) koppelt, dass die Winkelbewegung der Sitzbaugruppe (12, 72) zu einer Normalgebrauchsposition hin zu einer Winkelbewegung der Bandablenkeinrichtung (54, 56 , 80) zum Ablenken des Bands (58) aus dem Bandweg führt.

2. Kindersicherheitssitz nach Anspruch 1, bei dem die Antriebsbaugruppe über einen zweiten Hebel (46, 48), der fest mit dem Bandablenkhebel (54, 56) verbunden ist, und einen Nocken (42) an der Sitzbaugruppe (12), der mit einem NockenstöBel (44) am zweiten Hebel (46, 48) in Eingriff steht, verfügt .

3. Kindersicherheitssitz nach Anspruch 2, bei dem der Nockenstößel (44) so positioniert ist, dass er ein Stück entfernt von der Hebelschwenkachse (50, 52, 82), das größer als der Abstand des Bandwegs von der Hebelschwenkachse (50, 52, 82) ist, an den zweiten Hebel (46, 48) gekoppelt ist.

4. Kindersicherheitssitz nach Anspruch 3, bei dem der Nocken in einem Basisabschnitt (36) der Sitzbangruppe (12) über einen Schlitz (42) verfügt.

5. Kindersicherheitssitz nach Anspruch 1, bei dem die Antriebsbaugruppe über eine Kopplungseinrichtung (86) verfügt, die die Sitzschwenkachse (84) so mit der Hebelschwenkachse (82) verbindet, dass eine winkelbewegung der Sitzschwenkachse (74) in einer ersten Richtung zu einer winkelbewegung der Hebelschwenkachse (82) in einer zweiten Richtung führt, die zur ersten Richtung entgegengesetzt ist.

6. Kindersicherheitssitz nach Anspruch 1, bei dem die Antriebsbaugruppe über eine zahnstange (86) verfügt, die mit einem ersten Ritzel (84) an der Hebelschwenkachse (82) und einen zweiten Ritzel (90) an der Sitzschwehkachse (74) in Eingriff steht

7. Kindersicherheitssitz nach einem der vorstehenden Ansprüche, bei dem die Sitzbaugruppe über ein Zwischenelement (16) verfügt, das am Grundelement (10, 70) montiert ist und durch die Antriebsbaugruppe (44, 86) mit dem Bandablenkelement (54, 56, 80) verbunden ist, und zwar gemeinsam mit einem sitzkörper (72), der am Zwischenelement (16) für eine Bewegung zwischen einer senkrechten Position und einer geneigten Position angebracht ist.

## Revendications

1. Siège de sécurité pour enfant pour véhicules, comportant une partie de base (10, 70) adaptée pour être posée sur un siège de véhicule, un ensemble formant siège (12, 72) monté à pivotement sur la partie de base (10, 70) pour un mouvement angulaire autour d'un axe de pivotement de siège (14, 74), des moyens de guidage (62, 64) sur le siège pour enfant définissant un passage pour une sangle (58) d'une ceinture de sécurité de véhicule pour fixer le siège à un siège de véhicule et des moyens de déviation de sangle (54, 56, 80) positionnés de sorte que le mouvement angulaire de l'ensemble formant siège (12, 72) par rapport à la partie de base (10, 70) provoque un mouvement des moyens de déviation de sangle (54, 56, 80) entre une première position hors dudit passage de sangle et une deuxième position dans laquelle une sangle (58) qui suit ledit passage de sangle est déviée par rapport à celui ci, serrant de ce fait ladite sangle (58), **caractérisée en ce que** les moyens de déviation de sangle comportent un levier de déviation de: sangle (54. 56; 80) monté de façon pivotante sur la partie de base (10, 70) selon un mouvement angulaire autour d'un axe de pivotement du levier (50, 52, 82), et un ensemble d'entraînement (44, 86) attelant le levier de déviation de sangle (54, 56, 80) au siège (12, 72) de sorte que le mouvement angulaire de l'ensemble formant siège (12,: 72) vers une position d'utilisation normale entraîne un mouvement angulaire du levier de déviation de sangle (54, 56, 80) afin de dévier la sangle (58) par rapport audit passage de sangle.

2. Siège de sécurité pour enfant selon la revendication 1, dans lequel l'ensemble d'entraînement comporte un deuxième levier (46, 48) relié au levier de déviation de sangle (54, 56) et une came (42) sur l'ensemble formant siège (12), coopérant avec un suiveur de came (44) sur le deuxième levier (46, 48).

3. Siège de sécurité pour enfant selon la revendication 2, dans lequel le suiveur de came (44) est situé sur le deuxième levier (46, 48), en étant attaché à celui-ci, à une distance de l'axe de pivotement du levier (50, 52, 82) plus grande que la distance du passage de sangle par rapport à l'axe de pivotement du levier (50, 52, 82).

4. Siège de sécurité pour enfant selon la revendication 3, dans lequel la came comprend une fente (42) aménagées dans une partie de base (36) de l'ensemble formant siège (12).

5. Siège de sécurité pour enfant selon la revendication 1, dans lequel l'ensemble d'entraînements comprend un coupleur (86) reliant l'axe (74) de pivotement de siège à l'axe (82) de pivotement du levier de sorte que le mouvement angulaire de l'axe (74) de pivotement de siège dans une première direction entraîne un mouvement angulaire de l'axe (82) de pivotement du levier dans une deuxième direction, opposée à ladite première direction.

6. Siège de sécurité pour enfant selon la revendication 6, dans lequel l'ensemble d'entraînement comporte une crémaillère (86) venant en prise avec un premier pignon (84) situé sur l'axe (82) de pivotement du levier et avec un deuxième pignon (90) situé sur l'axe (74) de pivotement de siège;

7. Siège de sécurité pour enfant selon l'une quelconque des revendications précédentes, dans lequel le siège inclut un organe intermédiaire (16) qui est monté sur la partie de base (10, 70) et est couplé par l'ensemble d'entraînement (44, :86) au levier de déviation de sangle (54, 56, 80), ainsi qu'à un corps de siège (72) qui est monté sur l'organe, intermédiaire entre une position droite et une position repliée.
